# EUROPEAN PATENT APPLICATION

(11) **EP 2 759 853 A2**
(43) Date of publication of application: **30.07.2014**
(21) Application number: 14152375.3
(22) Date of filing: 24.01.2014
(51) Int. Cl.: G01V 1/38

(54) **Foldable wing bird for marine seismic survey systems**

(30) Priority: 24.01.2013 FR 1350631
(71) Applicant: CGG Services SA, 91300 Massy (FR)
(72) Inventor: Tonchia, Hélène, 91300 MASSY (FR)
(74) Representative: Regimbeau

(57) **Abstract**

A bird for a streamer or source of marine seismic survey system has a body configured to be attached to the streamer or source, and a wing connected to the body and having an active surface used to control depth and/or lateral position of the body. The wing is configured to be changed between an operational state in which the active surface is extended away from the body, and a folded state in which the active surface is folded close to the body.

## Description

### BACKGROUND

### TECHNICAL FIELD

Embodiments of the subject matter disclosed herein generally relate to birds that are attached to streamers or sources of marine seismic survey systems and are being used to control depth and/or lateral position of the streamer or source, and, in particular, to birds having foldable wings.

### DISCUSSION OF THE BACKGROUND

Marine seismic surveys are used to generate an image of the geophysical structure under the seafloor in order to make drilling a dry offshore well unlikely.

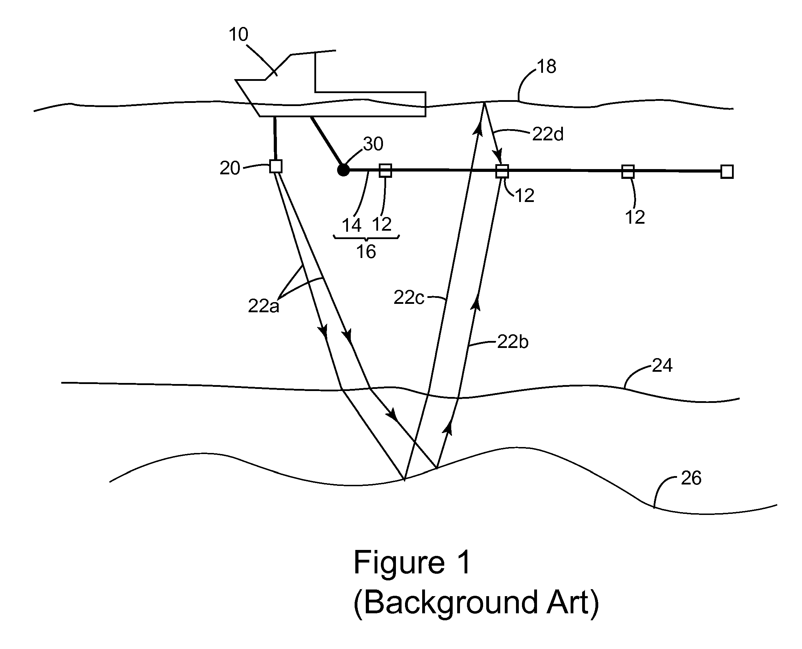

During a seismic survey, as shown in Figure 1, a vessel 10 tows one or more seismic sources 20 configured to generate acoustic waves 22a that propagate downward and penetrate the seafloor 24 until eventually being reflected by a reflecting structure 26.

The vessel 10 also tows acoustic detectors 12 arranged along a cable 14. The cable 14 and the detectors 12 are known as a streamer 16. The detectors 12 acquire information (seismic data) about the reflected waves 22b, 22c and 22d.

The streamer 16 may be towed horizontally, i.e., lying at a constant depth relative to the water's surface 18 (as illustrated in Figure 1) or slanted relative to the surface 18 (as disclosed, for example, in U.S. Patent No. 4,992,992).

The vessel 10 may tow plural streamers at the same time. During seismic data acquisition, the streamers' depth and lateral positions may be controlled using steering devices 30 known as "birds." The birds are attached to the streamers.

A bird typically has solid control surfaces (referred to as wings or fins) that are attached to a body and allowed to rotate around an axis while an area of the control surfaces is constant. When a bird's control surface moves through water, pressure on one side of such a surface may become greater than pressure on the other side thereof. The pressure difference yields a force perpendicular to the control surface and proportional to the area of the projection of the control surface. This force is used to adjust a bird's location in a plane perpendicular to the tow direction and, because the bird is attached to the streamer, also the streamer's depth and/or lateral position.

When the streamers are no longer used (i.e., the seismic survey has ended), they are retrieved on the vessel 10. Conventional birds, and, in particular, their control surfaces extending away from the cable 14, may be damaged during recovery. In view of their length and flexibility, the streamers are usually retrieved and stored on spools located on the deck of the vessel. When the streamers are retrieved, the solid control surfaces of conventional birds may be damaged or may get entangled, making it difficult to later roll out the streamers. Therefore, the wings of the birds or the birds have to be removed from the streamers when the streamers are retrieved, which is a time-consuming procedure.

In instances when an accidental loss of towing speed occurs, the control surfaces may not produce the intended steering, but instead cause undesirable drag forces that amplify the slow-down. In other instances, if the streamers get too close to one another, the bird's control surfaces may become entangled with neighboring streamers. In still another instance, a wing of the bird may be damaged (e.g., broken) and thus, the bird may start to spin. In this situation, although the operator may be aware of the damaged bird, he or she can do nothing to minimize the disturbance created by this bird.

Furthermore, there are instances in which the streamers need to be cleaned while deployed underwater to remove bio-fouling settlement that accumulates on their exterior surface. The cleaning devices used on the streamers are negatively impacted by the bird's control surfaces extending away from the streamer, which prevents the cleaning devices to pass over the bird's location. Therefore, cleaning devices have to be manually repositioned.

Accordingly, it would be desirable to provide birds and methods that avoid the afore-described problems related to the control surfaces.

### SUMMARY

A bird having one or more foldable wings is easier to recover and may benefit from the wing being foldable in various situations occurring during a marine seismic survey (e.g., when the towing speed decreases, when marine growth gets attached to the wing, etc.).

According to one exemplary embodiment, there is a bird for a streamer or a source of a marine seismic survey system. The bird has a body configured to be attached to the streamer or the source, and a first wing connected to the body and having an active surface used to control depth and/or lateral position of the body. The first wing is configured to be switched between an operational state in which the active surface is extended away from the body, and a folded state in which the active surface is folded close to the body.

According to another exemplary embodiment, there is a marine seismic survey system including a streamer or a source configured to be towed through water, and a bird connected to the streamer or the source. The bird has a body configured to be attached to the streamer or the source, and a first wing connected to the body and having an active surface configured to control depth and/or lateral position of the body. The first wing is configured to be switched between an operational state in which the active surface is extended away from the body, and a folded state in which the active surface is folded close to the body.

According to another exemplary embodiment, there is a method for steering a streamer or a source towed through water. The method includes connecting a bird having a foldable wing to the streamer or the source, and actuating the foldable wing to change from a folded state in which the foldable wing is folded to an operational state in which the foldable wing is extended. The method further includes using the bird to adjust a depth and/or lateral position of the streamer or the source.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a marine seismic survey system;
Figure 2A is a schematic diagram of a bird according to an exemplary embodiment, in an operational state;
Figure 2B is a schematic diagram of the bird illustrated in Figure 2A, in a folded state;
Figure 3 is a schematic diagram of a joint between segments of a support structure of a foldable wing and an actuating mechanism according to an exemplary embodiment;
Figure 4A is a schematic diagram of another bird according to an exemplary embodiment, in an operational state;
Figure 4B is a schematic diagram of the bird illustrated in Figure 4A, in a folded state;
Figures 5A and 5B are schematic diagrams of birds according to other exemplary embodiments;
Figure 6A is a schematic diagram of another bird according to an exemplary embodiment, in an operational state;
Figure 6B is a schematic diagram of the bird illustrated in Figure 6A, in a folded state;
Figure 7 is a schematic diagram of another bird according to an exemplary embodiment;
Figures 8A-D are schematic diagrams of another bird according to an exemplary embodiment;
Figures 8E-G are schematic diagrams of another bird according to an exsemplary embodiment;
Figure 9 is a schematic diagram of a marine seismic survey system using a bird according to an exemplary embodiment; and
Figure 10 is a flowchart illustrating steps performed by a method for steering a streamer or a source towed through water according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a bird for a streamer of a marine seismic survey system. However, such a bird may be used with other parts of a seismic survey system, e.g., a source.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

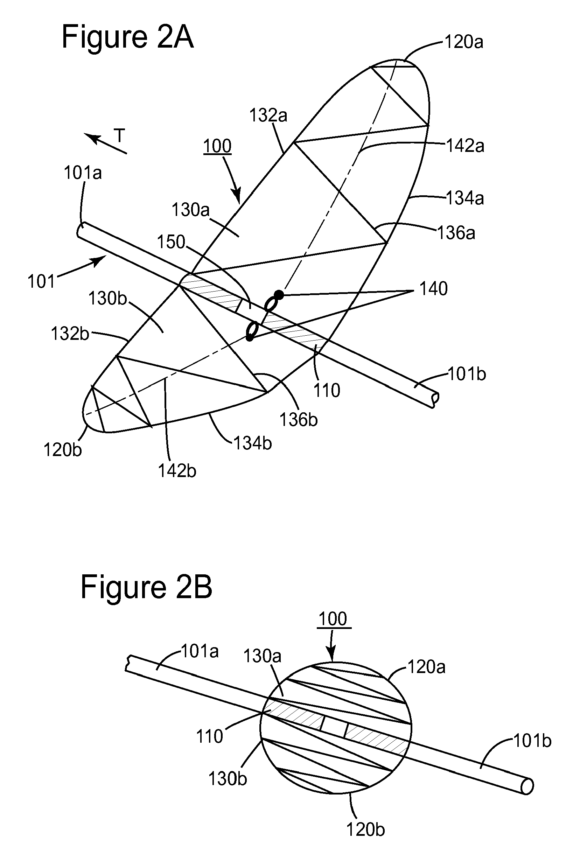

Figure 2A illustrates a bird 100 for a streamer (or source) of a marine seismic survey system according to an exemplary embodiment. A bird is understood in the following to be able to control lateral movement, or depth movement or both. The bird 100 has a body 110 configured to be attached to a streamer 101 and two wings 120a and 120b connected to the body 110. The number of wings (two) is merely an illustration and is not intended to be limiting. The bird may be attached to the streamer 101, for example, with a clamp, or may be attached to a corresponding base located between sections 101 a and 101 b of the streamer, i.e., the bird is in-line with the streamer.

Each of the wings 120a and 120b has an active surface 130a and 130b, respectively, used to control depth and/or lateral position of the body. The active surfaces 130a and 130b are configured to extend away from the body 110 in an operational state, and to fold close to the body 110 in a folded state as illustrated in Figure 2B. The wings 120a and 120b are configured to be switched between the operational state and the folded state (manually or automatically, by an actuation mechanism to be discussed later).

The force caused by a wing while towed through water is proportional to the area of the active surface's projection in the plane perpendicular to the towing direction. In the operational state, the active surface is extended to have a first area that is the maximum substantially flat area achievable for the given wing. The active surface is controlled (e.g., rotated) to have a non-zero projection on a plane perpendicular to the towing direction in order to generate a steering force. The steering force is understood to be a force the changes a lateral position of the bird, or a depth position of the bird or both. The steering force may be varied by varying the orientation of the active surface, as described, for example, in U.S. Patent No. 7,610,871 by Leclercq et al., the entire content of which is incorporated herein by reference.

In the folded state, as illustrated in Figure 2B, the active surfaces 130a and 130b are folded close to the body 110. In this state, a second area of the active surface (130a or 130b) is smaller than the first area thereof in the operational state. By minimizing the second area, the drag force (which is generated concomitant with the steering force and opposes towing) is minimized, the entire bird may be stored on the spool and/or a cleaning device may pass over the bird. The active surface 130a or 130b may be a flexible membrane sustained by a support structure 136a or 136b, respectively. The flexible membrane is made of a pliable, resistant and at least partially-impermeable material. For example, the flexible membrane may be made of plastic. In one embodiment, the flexible membrane may be made of an inflatable sheet-like plastic container that may be filled with gas.

The wings are in the operational state while the seismic survey is performed so that the active surfaces can efficiently be used for steering if needed. When the streamer is retrieved after finishing the seismic survey, the wings are preferably in the folded state. While the streamer having the bird attached is towed through water, the wings may be switched from the operational state to the folded state when the towing speed decreases (because by folding the wings, the drag force decreases), or when the streamer becomes too close to another streamer (to avoid entangling of the bird with the other streamer and its instrumentation). The wings may be later unfolded (extended) when the towing speed recovers or when the distance between streamers increases.

Having the wings folded is also preferable when an equipment failure occurs. Folding the wings may also have the beneficial effect of releasing marine growth that has undesirably become attached to the active surfaces.

The wings may be folded and/or unfolded manually or by an actuating mechanism 140. The actuating mechanism 140 may receive commands from a controller 150 located in the body 110 of the bird 100. Alternatively, the controller may be located on the towing vessel.

The controller 150 may be connected to (i.e., in communication with) one or more sensors that provide information enabling the controller to determine whether the wing(s) should be switched to/from the operational state (i.e., to be folded or extended). For example, sensors may enable the controller to determine if a cleaning device approaches the bird, and/or if the towing speed has decreased below a predetermined speed threshold, and/or if the distance to a neighboring streamer decreases below a predetermined distance threshold. The controller may also receive information (e.g., from the towing vessel via the streamer) indicating that the streamer is retrieved on the towing vessel.

In one embodiment, the actuating mechanism 140 may consist of elements 136a or 136b (which may also operate as a support structure) biasing the wing(s) to be in the operational state, and a string 142a or 142b usable to manually or automatically fold the respective wing. The actuating mechanism 140 may include an electric motor.

In the embodiment illustrated in Figures 2A and 2B, the support structure 136a (and/or 136b) includes substantially rigid segments connected to each other. A first rigid segment is connected to the body 110 and the other rigid segments are each connected to an end of a previous rigid segment. The rigid segments alternate back and forth from a leading edge 132a (or 132b) to a trailing edge 134a (or 134b) of the flexible membrane (leading and trailing being defined relative to the towing direction T). Due to an actuating force, the first segment may be brought first near the body, followed by the second segments connected to the first segment being brought near the body, etc. Alternatively, relative distances between unconnected ends of the rigid segments may decrease simultaneously until the flexible membrane is folded close to the body. Similarly, extending the support structure due to an actuating force may be performed sequentially or simultaneously. The manners of folding and of extending the active surfaces may be different.

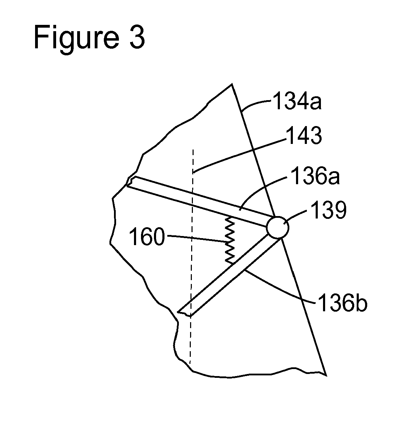

In an embodiment illustrated in Figure 3, a spring 160 may be configured to push the rigid segments 135 and 137 of a support structure away from one another. The rigid segments 135 and 137 are connected to one another by a hinge 139. A string 143 tied to an edge of the flexible membrane may be pulled toward the body to bring the rigid segments 135 and 137 closer together, and released manually or by a motor, allowing the spring 160 to push the rigid segments 135 and 137 away from one another.

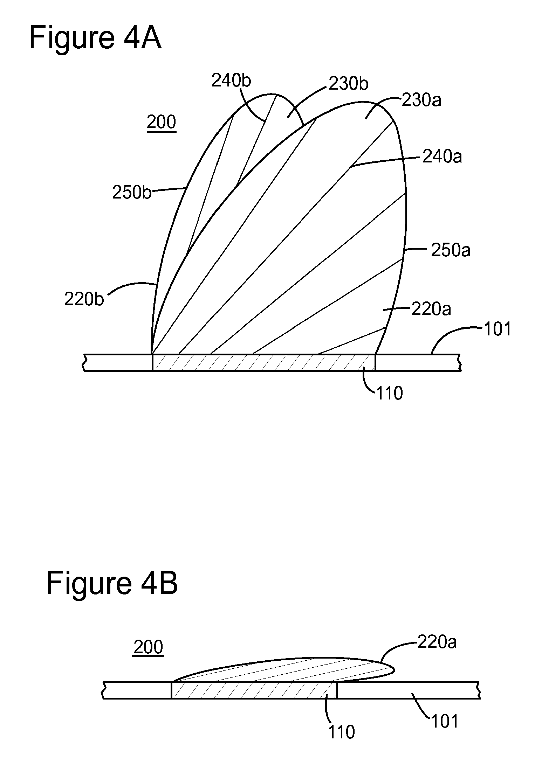

In another embodiment 200 illustrated in Figures 4A (in the operational state) and 4B (in the folded state), the support structure 240a (and/or 240b) of wing 220a (and/or 220b) also includes substantially rigid segments, each rigid segment having a first end connected to the body 110 at different positions along the body 110 and a second end extending away from the body 110 to the distal edge 250a (or 250b) of the membrane 230a (or 230b).

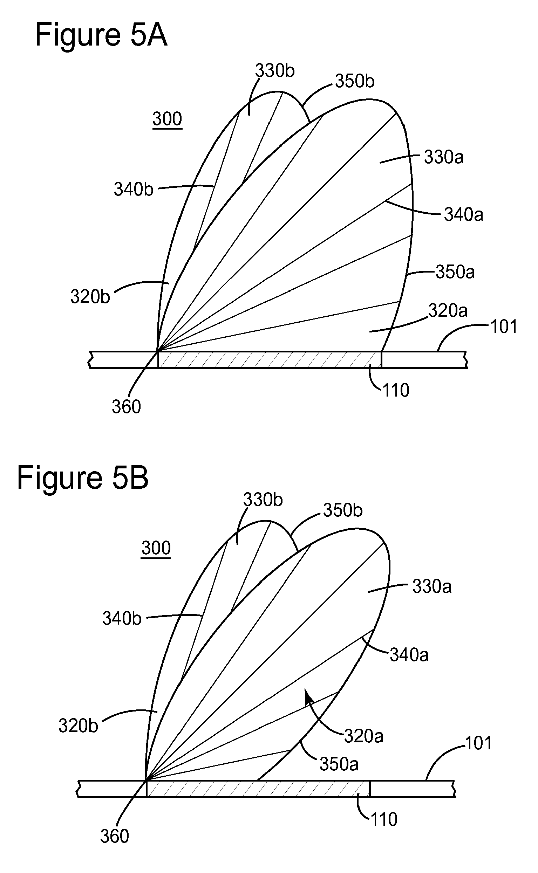

In another exemplary embodiment 300 illustrated in Figure 5A, the support structure 340a (and/or 340b) of wing 320a (and/or 320b) also includes substantially rigid segments, each rigid segment having a first end connected to the body 110. Unlike the embodiment illustrated in Figures 4A and 4B, the rigid segments of the support structures 340a and 340b are connected to the same frontal position 360 on the body 110, (the second end thereof extending away from the body 110 to the distal edge 350a or 350b of the membrane 330a or 330b). Figure 5B shows another embodiment, similar to that shown in Figure 5A, but having the wings 320A and 320B more narrow at their base, i.e., where the wings are connected to the body 110.

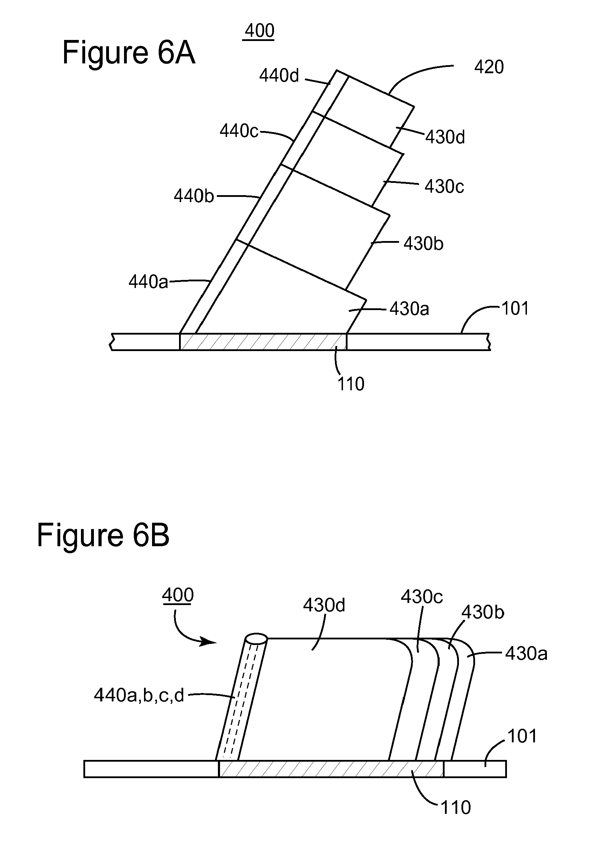

In another exemplary embodiment 400 illustrated in Figures 6A (in the operational state) and 6B (in the folded state), the active surface of the wing 420 is configured to be folded by retracting at least one portion (e.g., 430b, 430c, 430d) thereof toward the body 110. The wing 420 includes a telescopic support element having plural rigid segments 440a, 440b, 440c and 440d. It should be understood that the number of portions of the active surface and of rigid segments of the telescopic support is exemplary and not intended to be limiting.

Each segment (440a, 440b, 440c, 440d) of the telescopic support element is connected to one of plural portions (430a, 430b, 430c, 430d) of the active surface. The plural portions 430a, 430b, 430c, 430d of the active surface may be made of semi-rigid sheets in order to be able to withstand the pressure difference on opposite sides thereof. The number and shape of the portions of the active surface of wing 420 are exemplary and are not intended to be limiting.

In the operational state, the plural segments 440a, 440b, 440c, 440d of the telescopic support element and the plural portions 430a, 430b, 430c, 430d of the active surface are arranged in a sequence extending away from the body 110. In the folded state, plural portions 430a, 430b, 430c, 430d of the active surface may slide one near the other close to the body, while the segments 440a, 440b, 440c, 440d may slide one inside the other as illustrated in Figure 6B.

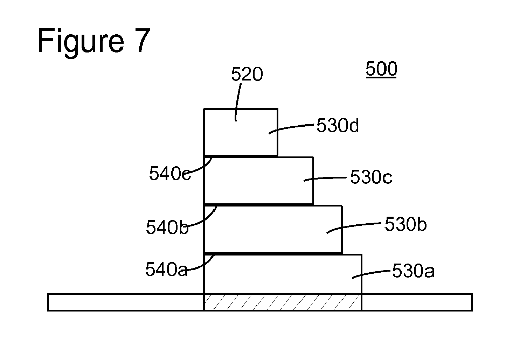

In a different embodiment 500 illustrated in Figure 7, the active surface of the wing 520 may be made of rigid panels 530a, 530b, 530c, 530d connected to one another via substantially straight hinges 540a, 540b, 540c.

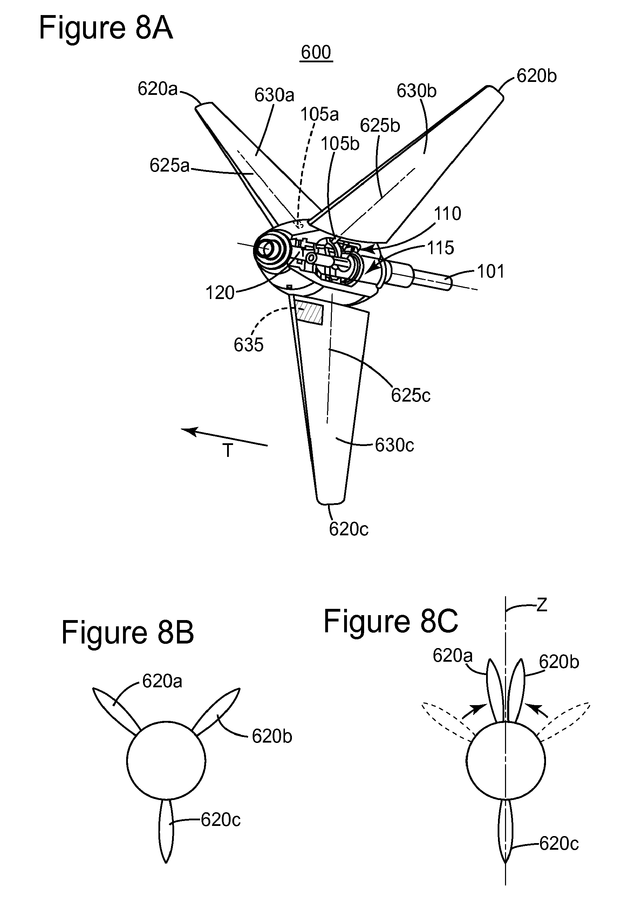

In another embodiment 600 illustrated in Figure 8A, the wings 620a and 620b are controlled to achieve a steering force, while the keel 620c is an element of stability and may also include a ballast body 635. Thus, the wings 620a and 620b may be rotated around respective axes 625a and 625b, while keel 620c is free to rotate around axis 625c (being free to rotate, it is likely that the surface 630c will achieve a position in which equal pressures are exerted on its sides).

Due to the ballast body 635, the keel 620c tends to maintain a downward orientation and is less likely to get entangled with neighboring streamers or to have marine growth attached. Additionally, since the keel 620c is free to rotate, it is likely that keel 620c would cause no or a small drag force. Therefore, in one embodiment, only the wings 620a and 620b are configured to switch between an operational state in which their respective active surfaces 630a and 630b are extended away from the body 110 (as shown), and a folded state in which the active surfaces 630a and 630b are folded close to the body 110. However, in another embodiment all three wings (620a, 620b and 620c) are foldable.

The controller 115 and motors 105a and 105b are operable to control the wings 620a and 620b, respectively, between the operational state and the folded state. They may be located inside the body 110. One or more sensors 120 may also be located on or inside the body 110. The sensor 120 may be used to determine when the cleaning device is approaching the bird and to instruct the controller 115 to automatically fold the wings so that the cleaning device can pass over the bird, when moving along the streamer.

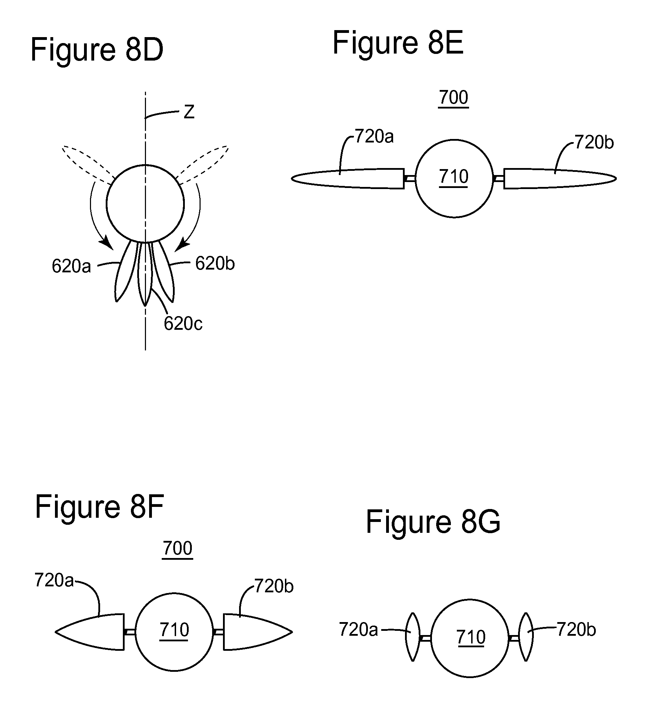

In still other embodiments illustrated in Figures 8B-D, the axes of the two wings 620a and 620b are configured to move relative to the body to achieve a folded state. Figure 8B is a frontal view of the wings at nominal positions. Figure 8C shows an embodiment having the two wings 620a and 620b moving toward a vertical axis Z, which is opposite to the keel 620c. Figure 8D shows an embodiment in which the two wings 620a and 620b also move toward the vertical axis Z, but next to the keel 620c.

In another embodiment illustrated in Figures 8E-G, the wings may rotate around their axes prior to being folded next to the body of the bird. In this respect, Figure 8E, which is a frontal view of a bird 700, shows the bird 700 having a body 710 and two wings 720a and 720b. The wings 720a and 720b are first rotated around their axes as illustrated in Figure 8F and then the wings are folded along the body 710 as illustrated in Figure 8G. Thus, in this embodiment, the wings may be folded next to the body not by modifying their effective surface but rather by changing the orientation of their axes. This embodiment may be advantageous when a wing becomes damaged and the bird spins out of control. In order to minimize the influence of the bird on the streamer or source, the operator can now fold both the damaged wing and the normally functioning wing. Note that in this embodiment, the folded wings are not accommodated inside the body 710 of the bird, but rather they are completely outside the body.

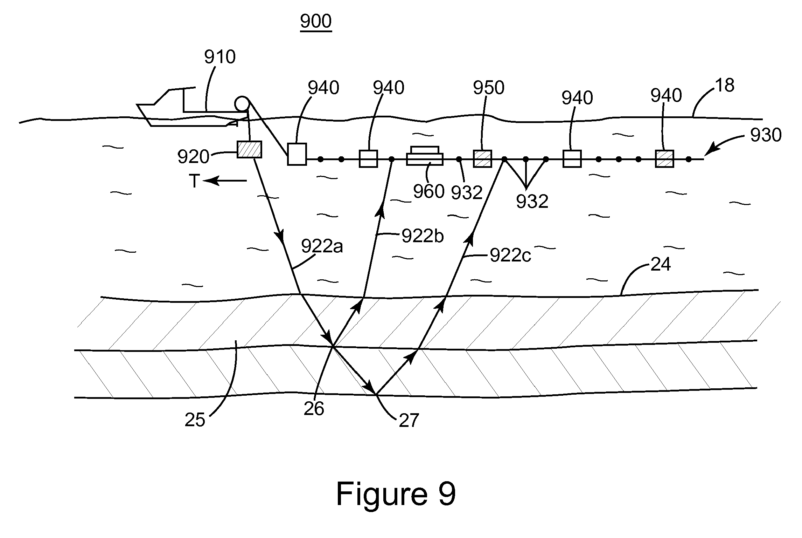

Figure 9 is a schematic diagram of a marine seismic survey system 900 using at least one bird according to an exemplary embodiment. A vessel 910 tows a seismic source 920 and plural streamers such as 930, each streamer carrying an array of seismic receivers 932 (e.g., hydrophones). The streamers are maintained at predetermined horizontal cross-line distances and at predetermined depths relative to the water surface 18. The streamers do not have to be horizontal; for example, the streamers may have a parameterized variable depth profile. The depth of the streamers is controlled along their length.

The seismic source 920 is configured to generate seismic waves 922a that propagate downward toward the seafloor 24 and penetrates the formation 25 under the seafloor 24 until it is eventually reflected at discontinuity locations 26 and 27. The seismic source may include plural individual sources that may be located on a horizontal line, slanted line, etc.

The reflected seismic waves such as 922b and 922c propagate upward and can be detected by one of the receivers 932 on the streamer 930. Based on the data collected by the receivers 932, an image of the subsurface formation 25 is generated.

To maintain the streamers or sources at a desired position (i.e., such as to have predetermined cross-line distances and predetermined depths), one or more birds 940 may be attached to the streamer 930 or to the source 920. At least one bird 950 has one or more foldable wings as described above. Although relative to Figure 9, bird 950 is singled out as having one or more foldable wings, it should be understood that some or all the birds 940 may have foldable wings. A cleaning device 960 traveling along the streamer 930 may pass over the bird 950 having at least one wing in a folded state.

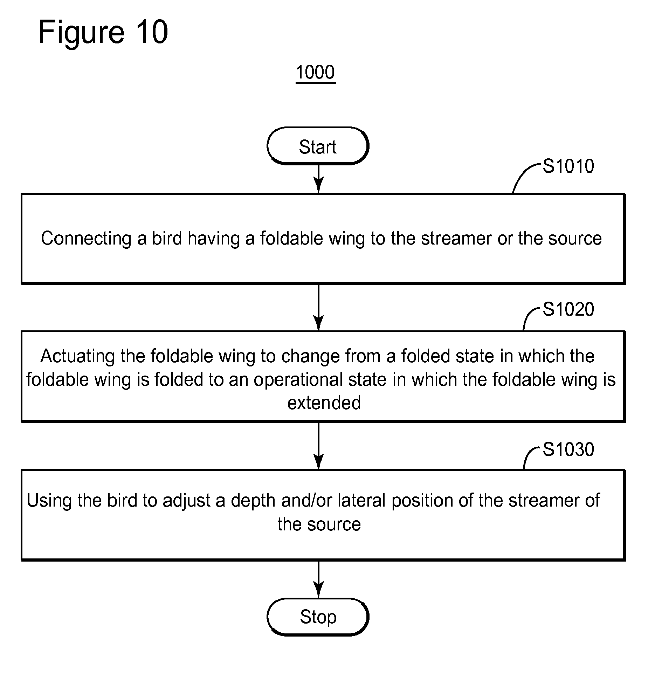

Figure 10 is a flowchart illustrating steps performed by a method 1000 for steering a streamer or a source towed through water according to an exemplary embodiment. The method 1000 includes connecting a bird having a foldable wing to the streamer or the source, at S1010. Further, the method includes actuating the foldable wing to change from a folded state in which the foldable wing is folded to an operational state in which the foldable wing is extended, at S1020. The method also includes using the bird to adjust a depth and/or lateral position of the streamer or the source, at S1030.

The disclosed exemplary embodiments provide birds that have foldable wings. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that would be obvious to those skilled in the art. Such other examples are intended to be within the scope of the claims.

## Claims

1. A bird (100, 200, 300, 400, 500, 600, 700) for a streamer (101, 930) or a source (920) of a marine seismic survey system (900), the bird comprising:
a body (110) configured to be attached to the streamer or the source; and
a first wing (120a, 120b, 220a, 220b, 320a, 320b, 420, 520, 620a-c, 720a, 720b) connected to the body and having an active surface (130a, 130b, 230a, 230b, 330a, 330b, 430a-d, 530a-d, 630a-c) used to control depth and/or lateral position of the body,
wherein the first wing is configured to be changed between an operational state in which the active surface is extended away from the body, and a folded state in which the active surface is folded close to the body.

2. The bird of claim 1, wherein
in the operational state, the active surface has a first area that may be controlled to generate a steering force as the bird is towed through a fluid, and,
in the folded state, the active surface has a second area smaller than the first area.

3. The bird of claim 1, wherein the first wing comprises:
a support structure; and
a flexible membrane supported by the support structure and forming the active surface.

4. The bird of claim 3, wherein the support structure includes substantially rigid segments, a first rigid segment being connected to the body and the rigid segments other than the first segment being each connected to an end of a previous rigid segment, the rigid segments alternating back and forth from a leading edge to a trailing edge of the flexible membrane.

5. The bird of claim 3, wherein the support structure includes substantially rigid segments, each rigid segment having a first end connected to the body and a second end extending away the from the body to a distal edge of the flexible membrane.

6. The bird of claim 1, wherein the first wing comprises:
a telescopic support element having plural segments, each segment being connected to one of plural portions of the active surface, the plural segments and the plural portions being arranged in a sequence extending away from the body in the operational state.

7. The bird of claim 1, further comprising:
an actuation mechanism configured to switch the first wing between the operational state and the folded state, wherein the actuation mechanism operates based on information received from one on more sensors indicating at least one of:
a cleaning device approaching the bird,
a towing speed decreasing below a predetermined speed threshold,
a distance to a neighboring streamer decreasing below a predetermined distance threshold, and
an ongoing streamer recovery.

8. The bird of claim 1, wherein the active surface includes plural panels connected by hinges to each other configured to overlap in the folded state and to unfold forming a substantially planar surface in the operational state.

9. A marine seismic survey system (900), comprising:
a streamer (101, 930) or a source (920) configured to be towed through a fluid; and
a bird (100, 200, 300, 400, 500, 600, 700) connected to the streamer or the source and having
a body (110) configured to be attached to the streamer or the source; and
a first wing (120a, 120b, 220a, 220b, 320a, 320b, 420, 520, 620a-c, 720a, 720b) connected to the body and having an active surface (130a, 130b, 230a, 230b, 330a, 330b, 430a-d, 530a-d, 630a-c) used to control depth and/or lateral position of the body,
wherein the first wing is configured to be changed between an operational state in which the active surface is extended away from the body, and a folded state in which the active surface is folded close to the body.

10. The marine seismic survey system of claim 9, wherein the first wing comprises:
a support structure; and
a flexible membrane supported by the support structure and forming the active surface.

11. The marine seismic survey system of claim 10, wherein the support structure includes substantially rigid segments,
a first rigid segment being connected to the body and the rigid segments other than the first segment being each connected to an end of a previous rigid segment, the rigid segments alternating back and forth from a leading edge to a trailing edge of the flexible membrane, or
the substantially rigid segments having a first end connected to the body and a second end extending away from the body to a distal edge of the flexible membrane.

12. The marine seismic survey system of claim 9, wherein the first wing comprises:
a telescopic support element having plural segments, each segment being connected to one of plural portions of the active surface, the plural segments and the plural portions being arranged in a sequence extending away from the body in the operational state.

13. The marine seismic survey system of claim 9, further comprising:
an actuation mechanism configured to switch the first wing between the operational state and the folded state, the actuation mechanism operating based on information received from one on more sensors indicating at least one of:
a cleaning device approaching the bird,
a towing speed decreasing below a predetermined speed threshold,
a distance to a neighboring streamer decreasing below a predetermined distance threshold, and
an ongoing streamer recovery.

14. The marine seismic survey system of claim 9, wherein the bird has a second wing connected to the body and a keel connected to the body, the second wing (A) having a second active surface configured to extend and fold relative to the body, and (B) switching between the operational state in which the second active surface is extended, and the folded state in which the second active surface is folded close to the body.

15. A method (1000) for steering a streamer or a source towed through a fluid, the method comprising:
connecting (S1010) a bird having a foldable wing to the streamer or the source;
actuating (S1020) the foldable wing to change from a folded state in which the foldable wing is folded to an operational state in which the foldable wing is extended; and
using (S1030) the bird to adjust a depth and/or lateral position of the streamer or the source.
